# EUROPEAN PATENT SPECIFICATION

(11) **EP 1 483 364 B1**
(45) Date of publication and mention of the grant of the patent: **07.12.2005**
(21) Application number: 03708313.6
(22) Date of filing: 14.02.2003
(51) Int. Cl.: C12C 1/15

(54) **METHOD AND APPPARATUS FOR MALTING**
VERFAHREN UND VORRICHTUNG ZUM MÄLZEN
PROCEDE ET DISPOSITIF DE MALTAGE

(30) Priority: 16.02.2002 GB 0203763; 06.04.2002 GB 0207965; 31.07.2002 GB 0217663; 27.08.2002 GB 0219782; 22.10.2002 GB 0224514
(43) Date of publication of application: 08.12.2004
(73) Proprietor: Harris, Nicholas J., Eyemouth TD14 5JF (GB); Harris, June, Eyemouth TD14 5JF (GB)
(72) Inventor: HARRIS, Nicholas, J., Eyemouth TD14 5JF (GB)
(74) Representative: Henderson, Wendy Agnes
(86) International application number: PCT/GB2003/000673
(87) International publication number: WO 2003/068903

(56) References cited:
- CH-A- 504 528
- DE-A- 1 962 308
- DE-A- 3 049 107

## Description

### Field of the Invention

The present invention relates to the malting of grain, particularly barley, including all five phases of the malting process, namely drying, steeping, germinating, kilning, and roasting, and provided means intended for use in that process.

### Background to the Invention

The malting process consists of five identifiable phases, which are drying, steeping, germinating, kilning and roasting.

The earliest historical records of the malting process go back to ancient Egypt. Through the ages this process has progressively become more mechanised at each phase, with a multiplicity of different methods employed, including the Saladin and Wanderhaufen germinating systems in the early 1960's. These systems produce good quality malt using "Bottom to Top Turners" working in long rectangular "streets" or boxes, during the germinating phase. These "turners" are machines which turn over or mix the mass of grain and are moved from box to box or end to end, as the process requires. The turners pick up the raw material at the bottom of the raw material mass ("piece") and drop it at the top, to fully aerate the piece and increase the volume during the germination phase. This is achieved by driving scoops or enclosed Archimedean screws into the bottom of the germinating piece and depositing the turned, and now lightened (increased in bulk volume), piece behind the advancing turning machine. None of the systems employed in mechanised malting processes achieve the preferred option of bottom to top turning during the other four phases of the malting process as well as during the germination phase.

It has been said that "Turners (during germination) must "lighten the piece," separate matted rootlets and allow the air to pass freely. Good turners can increase the volume of the piece by one quarter to one third." (Malting and Brewing Science, Briggs, Hough, Stevens and Young).

CH 504 528 discloses a malting apparatus comprising a vertical anger.

The drive to improve efficiency, at the lowest unit cost, has reduced the first four phases of the malting process (drying, steeping, germinating and kilning) to large batches produced in one or two circular vessels which use a multiplicity of prime movers within the vessel. (The last phase, roasting, is normally conducted separately from the first four phases). This condensing of the process has compromised malt quality with particular regard to loss of the benefit of turning the raw material from bottom to top. If the grain is not treated homogeneously in the processing equipment then a homogeneous product does not ensue. These large circular vessels operate by either moving the raw material towards a row of fixed stirring machines or driving a row of stirring machines through the static raw material. The stirring machines employed are open helical screws, which prevent the rootlets from matting during the germination phase, but do not turn the raw material from the bottom to the top during any of the first four phases of the malting process. In particular they do not enhance aeration, or increase the volume of the piece by one quarter to one third during the germination phase. A further defect, entailing further cost, associated with this type of equipment is that additional drives are also required to load, strip and discharge the vessels.

An object of the present invention is to provide improvements relating to the equipment used in the malting process, wherein the aforesaid disadvantages of the current processing equipment are obviated or mitigated.

A further object of the invention is to provide a single multi-purpose vessel equipped to carry out any or all of the five stages of the malting process, namely drying, steeping, germinating, kilning, and roasting. A yet further object of the invention is to provide equipment that permits the operation of the preferred practice of turning the material from the bottom of the grain mass to the top of the grain mass at any or all of the five stages of the malting process. A still further object of the invention is to provide improvements to the quality of malt, especially with regard to homogeneity of the grains, by carrying out the malting process utilising the equipment of the present invention.

### Summary of the Invention

Accordingly the aforesaid objects are addressed in that the present invention provides a single multi-purpose vessel, wherein all five stages of the malting process can be conducted to good effect whilst avoiding the compromised quality of the product such as is produced by the currently available equipment which uses large vessels with a multiplicity of prime movers to carry out the various operations required.

According to one aspect of the present invention, a beneficial feature of the invention is the provision of a centrally located drive mechanism (or drive mechanisms) to be described hereinafter by reference to the accompanying drawings. Such a drive as proposed herein powers the loading and levelling mechanism, the "turning arm and stripping plates" and the mechanism for lifting the grain collected by the stripping mechanism from the bottom of the piece to the top for redistribution by the loading and levelling arms. Thus according to that aspect of the invention there is provided a drive mechanism comprising, drive means, a driven shaft arranged to be upstanding in use in relation to the piece, a plurality of radially positioned upstanding plates arranged in a declining stages of height and mounted for rotation substantially in the plane of the piece about said shaft, and preferably each of said plates is positioned by a radial off-set with respect to its radially inward neighbour such as to lag by a certain angular amount such that the overall effect is to provide a series of stripping plates constituting a sweeping arm extending from the shaft and having a curvature whereby the distal end of the arm with respect to the mounted end of the arm trails during each rotation of the shaft.

The function of the sweeping arm is to carry the stripping plates repeatedly through the grain mass in such a way that a thin layer of grain, substantially that which is adjacent to the bottom of the vessel (typically a foraminated floor), is collected by the stripping plates and propelled by the forces of their motion towards a centrally placed hopper set in the floor of the vessel.

According to a further aspect of the invention, there is provided a mass transfer device for lifting grain mass collected in the aforesaid hopper, to an elevated discharge level, and juxtaposed with respect to said device, for the purpose in use of collecting discharged grain mass for loading back into the piece, there are provided a plurality of loading arms mounted upon a driven shaft for rotation substantially in a plane parallel with the piece. In a preferred embodiment each loading arm having a curvature whereby the distal end of the arm with respect to the mounted end of the arm trails during each rotation of the shaft, the said curvature preferably corresponding to the curvature of the aforementioned stripping plate arms. The mass transfer device is preferably an Archimedean screw conveyor device.

According to a preferred aspect of the invention, the stripping plate arms and loading arms are mounted upon a common drive shaft and spaced apart thereon by a distance corresponding in use to maximum height of the piece, in order to prevent the loading arms dragging through the piece during processing. In a most preferred aspect of the invention the loading arms are moveable in distance from the stripping plate arms so that they can be adjusted to correspond closely to the top of the piece at each stage of the process, to facilitate even distribution of the grain.

According to yet an other aspect of the invention there is provided a process vessel incorporating a generally upstanding cylindrical walled section having a drive means located in an upper part thereof, and operationally connected to an upright centrally positioned drive shaft provided at an upper end thereof a plurality of curved loading arms, and at a lower end thereof a plurality of correspondingly curved stripping arms formed from a series of upstanding plates arranged in a declining stages of height, the said vessel having a floor for receiving in use a piece, and a centrally positioned piece mass collection hopper, the said shaft being positioned above said hopper and containing within its length a mass transfer device to elevate grain mass from the hopper to an upper discharge port of the shaft adjacent to the loading arms. The vessel is suitably equipped as necessary with aeration and heating means as is understood in the art to be required for a malting process.

From the hopper in the vessel floor, the grain is lifted by a mass transfer means or mechanism, preferably a screw conveyor located in a sleeve (said sleeve serving as the shaft surface), towards the top of the vessel where it can be redistributed onto the grain mass with the assistance of the loading arms. Thus bottom to top turning of the grain can be achieved by the combined action of the lower turning arms with height-staged stripping plates together with the centrally located lifting mechanism and upper loading arms.

The stripping plates can be carried on any number of turning arms, dependent on the desired size of the malting vessel or batch quantity. A preferred embodiment consisting of two opposing arms is shown in the Example and the accompanying drawings. The stripping plates are pieces of metal or other suitable material that are fixed to the turning arm or arms in a generally upright manner and are sized and shaped in such a fashion that they act as deflectors or ploughs when the arm is rotated, directing a thin layer of the grain towards the centre of the bottom of the vessel by the repeated passage of the plates through the grain mass.

The outermost stripping plate directs or deflects a portion of grain from the outermost part of the bottom of the vessel into the path of the next innermost plate. When the next arm carrying stripping plates passes, the grain originally from the outside portion of the bottom of the vessel is again moved one further unit (the radial distance swept by a stripping plate) towards the centre of the vessel. At the same time, because the plates increase in height towards the centre of the vessel, a portion of the grain that has dropped into place from the grain above the stripping plates following the previous passage of stripping plates is also moved inwards. By this method, successive passages of the turning arm or arms move a thin layer of the grain from the entire base of the vessel into the central hopper. By repetition the entire batch of grain is taken from the base of the vessel and transported to the top of the grain mass via the lifting mechanism. This procedure can be continued to turn over, loosen, aerate, or assist heating or cooling the grain mass, as often as desired at any stage of the malting process.

When employed in lifting the grain from the bottom of the vessel during turning procedures the lifting device can also serve to aerate or increase the bulk volume of the grain mass. When an Archimedean screw operating in a sleeve is employed as shown in the Example, the rate of volume lift of the screw is set to exceed the rate at which the stripping plates deliver material to its feed hopper. This enhances the aeration and avoids damaging the grain during transport. The lifting device is also usefully employed at the end of the process or a chosen process stage to discharge the grain via a discharge chute.

The loading arms are employed in distributing the grain both when the vessel is being loaded and also when the batch is being turned. In a preferred embodiment they are located directly above the trailing edge of the turning arms and follow the same curve or profile. It is also preferred that they can be raised or lowered to match the batch volume in the vessel so that they can be set to distribute and even out the material effectively.

The vessel of the invention is also equipped with a number of other features to enable all aspects of the malting process to be carried out. These include insulation, air and water inlets and outlets, heat exchangers and means of humidifying the air. This allows appropriately conditioned air to be fed into the vessel depending on the stage of the malting process that is being carried out. For instance, roasting of the malt, if it is required, is conveniently carried out in the vessel, immediately following the germinating phase, by supplying hot air through the foraminated floor of the vessel whilst turning the piece.

Thus it will be understood that according to this invention there is provided a method of turning a piece that comprises introducing a mass of grain to a vessel to form a piece, arranging therein an upstanding driven shaft about which there are arranged curved turning arms comprising height-staged plates of radially declining height, at a lower end of the shaft, and collector loading arms of corresponding curvature at an upper end of the shaft, said shaft incorporating within its length a mass transfer device, and having a collection hopper at the lower end for introducing grain mass to the transfer device, and discharge ports at its upper end for discharging elevated grain mass, operating the driven shaft to turn the respective upper and lower arms, whereby grain mass at the lower end of the shaft migrates radially inwards to the collection hopper, elevating the grain mass to the discharge ports, collecting the grain mass and distributing same over the piece, said steps being operable in a continuous cycle for a period of time adequate for the purpose of a malting process.

The aforesaid mechanisms, vessel and method are ideally used to conduct the whole malting process within a single vessel, the manner of such use being more fully described hereinafter by way of illustrative example with reference to the accompanying drawings in which:
Figure 1 shows a cross section of the vessel equipped for carrying out all the stages of the malting process; and
Figure 2 shows a plan view of an embodiment of the turning arms and height-staged stripping plates of the invention.

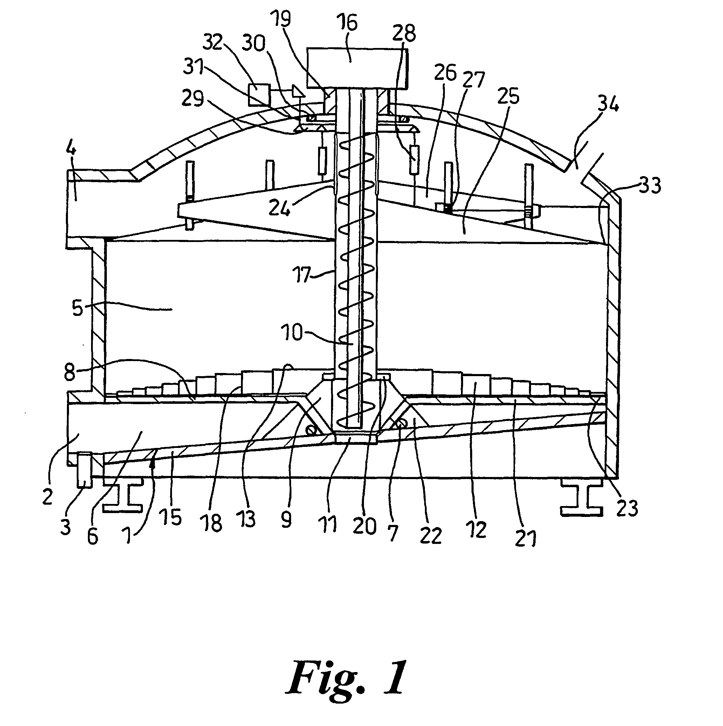

A vessel adapted for the performance of a malting process is represented by the cross sectional view of the vessel as shown in Figure 1. The main vessel **1** is built out of stainless steel. At the base of the vessel there is an air inlet duct **2**. This duct is fixed to the side of the vessel with a fall to drain **3** to aid drainage of the steep liquor. This also enables self-cleaning of debris and culms disposal after drying, kilning and roasting. The air inlet duct serves to introduce air to the vessel via a plenum chamber 6 and thence the perforated floor. The air is warmed and or humidified as required by the stage of the process using proprietary equipment. A similar air outlet duct **4** is also fixed to the top of the vessel. (The air inlet and outlet ducts house the following proprietary equipment, which is not shown:- Air heat exchanger, multi-louver dampers, butterfly valve, spray chamber and a centrifugal multi-speed fan).

The vessel houses a mass transfer mechanism including arms **12, 25** that sweep around the vessel at upper and lower levels, said arms being mounted on a centrally positioned drive shaft **17** that also incorporates a mass elevation device such as a screw conveyor **10**. This mechanism is put to the following purpose.

During the germination stage of the malting process high concentrations of carbon dioxide suppress respiration and cause "hot spots" in the piece **5.** Turning the piece from bottom to top, and lightening it to aid aeration, addresses this problem and improves evenness of modification during both steeping and germination. The airflow arrangements in the vessel permit periodic reversal of flow through the piece to remove the carbon dioxide gradient during germination. These procedures will also enhance the evenness of drying and colour formation during the subsequent stages of kilning and roasting. This significantly improves the finished malt quality and homogeneity.

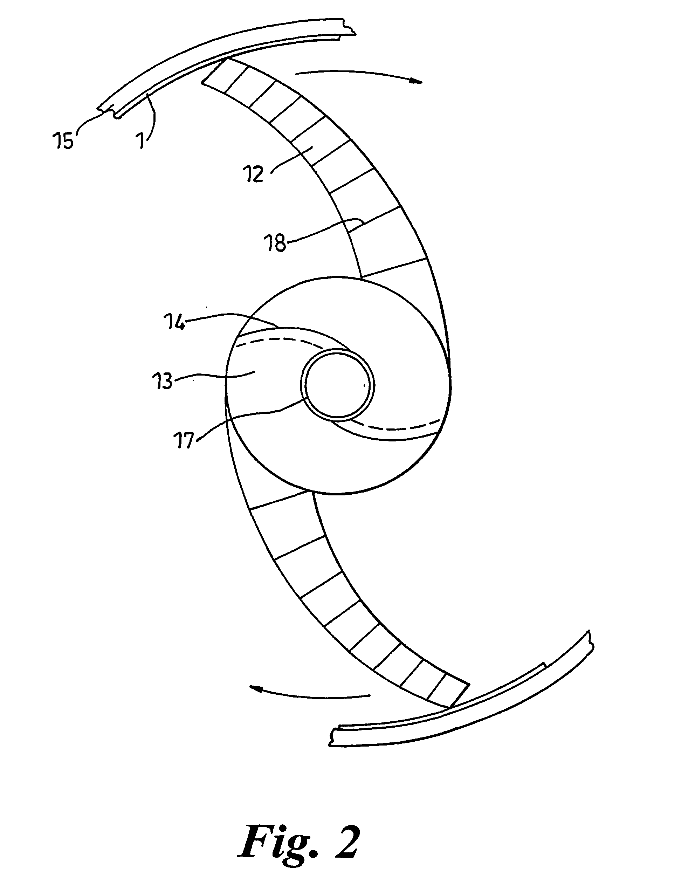

The plenum chamber 6 has a fall to the inlet duct to assist drainage and debris removal. There is a circular manifold **7** for high-pressure water injection during vessel cleaning and can also be used for air injection to rouse the piece and aerate during steeping. It can further be used for dousing during roasting. The static, stainless steel, foraminated floor **8** has a foraminated conical feed hopper **9**. The raw material is fed via this hopper to the mass elevation device in the form here of an Archimedean screw 10, during turning, or to the discharge point **11** at the end of each or any of the five process stages that can be carried out in the vessel. The rate of volume lift of the screw conveyor is chosen to exceed the rate of vessel stripping (removal of grain from the vessel) to enhance aeration of the piece being turned during germination, and to avoid damaging the raw material or over loading the turning arm 12. The central section **13** of the perforated floor is part of the turning arm, which rotates above the conical hopper. This central section has two curved stripping slots **14** (See Figure 2). These slots receive the grain collected by the action of the stripping plates and deliver it into the hopper 9. The slots are protected by suitable skirting (not shown) from grain in the body of the vessel falling in under gravity. This means that substantially only grain that has been collected by action of turning arm and stripping plates is fed to the screw conveyor.

The exterior of the vessel is coated with insulation 15. This is valuable for all five phases of the process where appropriate temperature control is needed to attain a quality product.

The central drive **16** is located at the top of the vessel and provides the motive force for the turning and loading arms and the Archimedean screw. Both the Archimedean lifting screw and the outer sleeve 17 rotate on the same centre of rotation. The outer sleeve acts as the drive shaft for both the turning and loading arms. The turning arms also carry the stripping plates **18**, which move the raw material towards the centre of the vessel as discussed above in the Summary of the Invention. The stripping plates in this embodiment are rectangular plates fixed vertically to the turning arms, angled to direct the grain across towards the centre of the vessel floor. The height of the stripping plates increases towards the centre of the vessel to provide the required action as discussed previously. The height of the stripping plates nearest the centre of the vessel corresponds to the height used for the stripping slot 14 with an incremental decrease from plate to plate towards the circumference of the vessel.

The power required to turn the arm is a function of the need for it to be turned. For example during the germination phase a well turned and lightened piece will permit easier movement of the turning arm than a dense compacted mass. This relationship can be applied to automatically increase or decrease the rate of rotation of the turning arms during any phase of the process by the appropriate use of an automatic system controller e.g. including a microprocessor. The airflow and air temperature controls can also be similarly moderated by the state of the grain mass as may be detected by the force required to move the turning arm. Thus increased resistance to turning of the arms indicates a compact state in the piece, thus requiring further work to lighten the piece which will be detectable when resistance eases.

The Archimedean sleeve is located in top **19** and bottom **20** bearings. The bottom bearing is secured by means of horizontal supports from the circumference **21** and the base **22** of the vessel. These supports also act as supports for the perforated floor. A load bearing safety plate/distance piece **23** is fixed circumferentially to prevent the stripping plates from coming into contact with the perforated floor. The Archimedean sleeve has two slots cut into the top section **24**. These act as discharge points for the raw material being lifted from the bottom of the vessel to the top. A distribution chute allows the raw material to drop in front of the loading arms 25, which then spreads it evenly over the top of the piece. These loading arms are located directly above the trailing edge of the turning arms and follow the same curve profile. This arrangement maintains an even raw material depth to avoid air channelling. These loading arms are attached to support brackets **26** via racks and pinions **27**. These raise and lower the loading arms as needed to permit proper control of the distribution of the grain batch. The level of the batch fluctuates due to the change in moisture content and bulk density of the raw material during the five different phases of the process. Further the high quality bottom to top turning that the equipment permits leads to substantial volume increases during lightening procedures carried out during any one of the process stages, especially during the germination phase.

The drive for these racks and pinions is transmitted via drive shafts, which have splined couplings **28** to allow for the rise and fall of the loading arms. The drive end of these drive shafts mesh into a double sided cog **29** which is mounted in a free running bearing **30** at the top of the vessel. The double-sided cog is rotated externally when the loading arms are required to be raised or lowered through the drive shaft **31** this can be achieved either manually or via the indexing motor **32**. Sensors located at the loading arm tips **33** supply the signal for this motor to either raise or lower the loading arms. In the absence of a signal to the indexing motor the drive shafts and double-sided cog free-wheel, so maintaining the set height of the loading arms.

Raw material is supplied via the inlet pipe **34** at the beginning of each batch to be processed.

All five phases of the malting process can be carried out in one vessel as described in this example. However, depending on the scale of malting operation required a multiplicity of vessels can be utilised for efficiency of throughput. Whilst it is conceivable to house a plurality of mutually laterally spaced lifting and turning mechanisms in a single housing to process a piece of substantially large surface area, this arrangement may be liable to leave "dead spots" in the piece where elevation and turning is ineffective or inefficient. Therefore, the confinement by use of a cylindrical wall section around the lifting and turning mechanism is considered to be the best mode of operation.

Normally the drying phase is kept separate from the following four phases with the exception of some specialist roasted products. Steeping, germination and kilning phases can all be run consecutively within one vessel or by transfer to other vessels to maximise process flexibility and energy conservation. If a multiplicity of vessels is used two or more phases can be operated concurrently if desired to maximise throughput. With the exception of roasting raw material after the drying phase for specialist products, as mentioned above, the roasting phase normally commences after the germination phase and replaces the kilning phase by simply applying much higher air on temperatures to the malted material.

## Claims

1. A method for carrying out a malting process wherein a mass of grain is introduced into a vessel (1), the portion of the grain that is substantially adjacent to the base of the vessel is moved, in an incremental fashion, to a collection hopper (9) in the centre of the base of the vessel by the action of height-staged plates (18) of radially declining height mounted on turning arms (12), said turning arms rotating in a substantially horizontal plane and being located at the lower end of an upstanding driven shaft (17), the grain collecting in said collection hopper is then elevated to the top of the mass of grain by a mass transfer device and distributed over said mass of grain by the action of loading arms (25) located at the upper end of the upstanding driven shaft such that the overall effect is to turn over the grain mass introduced to the vessel in a bottom to top fashion, said turning over being operable in a continuous cycle for a period of time adequate for the purpose of a malting process.

2. A method for carrying out a malting process according to claim 1 wherein the process is a drying process and the vessel is supplied with conditioned air.

3. A method for carrying out a malting process according to claim 1 wherein the process is a steeping process and the vessel is supplied with means for the supply and removal of water and conditioned air.

4. A method for carrying out a malting process according to claim 1 wherein the process is a germinating process and the vessel is supplied with conditioned air and water.

5. A method for carrying out a malting process according to claim 1 wherein the process is a kilning process and the vessel is supplied with conditioned air.

6. A method for carrying out a malting process according to claim 1 wherein the process is a roasting process and the vessel is supplied with conditioned air and water.

7. A method for carrying out a malting process according to claim 1 wherein the process consists of any combination of drying, steeping, germinating, kilning and roasting.

8. An apparatus for carrying out malting processes comprising a vessel provided with a drive means, a driven shaft (17) arranged to be upstanding in use in relation to the grain mass, a plurality of turning arms (12) mounted for rotation substantially in the plane of the piece about said shaft, said turning arms comprising a plurality of radially positioned upstanding plates (18) arranged in declining stages of height, such that the overall effect is to provide a series of stripping plates for moving grain incrementally from the base of the vessel, a collection hopper (9) located at the centre of the base of the vessel, and a mass transfer device for lifting the grain mass from the collection hopper to an elevated discharge level, a plurality of loading arms (25) rotating substantially in the plane of the piece mounted upon a driven shaft, for redistributing the elevated grain onto the grain mass.

9. An apparatus for carrying out a malting process according to claim 8 wherein the plurality of radially positioned upstanding plates are each off-set radially by a certain angular amount, constituting a sweeping arm extending from the shaft and having a curvature whereby the distal end of the arm with respect to the mounted end of the arm trails during each rotation of the shaft.

10. An apparatus for carrying out a malting process according to claim 8 or 9 wherein the mass transfer device is located within the driven shaft which drives the loading arms and the stripping plates.

11. An apparatus for carrying out a malting process according to claim 10 wherein the mass transfer device is a screw conveyor located in a sleeve.

12. An apparatus for carrying out a malting process according to any one of claims 8 to 11 wherein the said loading arms rotate substantially in a plane parallel to the grain mass.

13. An apparatus for carrying out a malting process according to any one of claims 8 to 11 wherein the said loading arms have a curvature whereby the distal end of the arm with respect to the mounted end of the arm trails during each rotation of the shaft, the said curvature corresponding to the curvature of the aforementioned sweeping arm.

14. An apparatus for carrying out a malting process according to any one of claims 8 to 14 wherein the loading arms are moveable in distance from the sweeping arm.

15. An apparatus for carrying out a malting process according to any one of the preceding claims 8 to 14 wherein the vessel is substantially cylindrical in section and is further equipped with a foraminated floor, insulation, air and water inlets and outlets, heat exchangers and means of humidifying the air.

## Patentansprüche

1. Verfahren zum Durchführen eines Mälzprozesses, wobei eine Getreidemasse in ein Gefäß (1) eingeführt wird, wobei der Anteil des Getreides, welcher der Basis des Gefäßes im Wesentlichen benachbart ist, durch die Wirkung von höhengestuften Platten (18) von radial abnehmender Höhe, die an Dreharmen (12) angebracht sind, schrittweise zu einem Sammeltrichter (9) in der Mitte der Basis des Gefäßes bewegt wird, wobei sich die Dreharme in einer im Wesentlichen horizontalen Ebene drehen und an dem unteren Ende einer aufrechten angetriebenen Welle (17) angeordnet sind, wobei das Getreide, welches in dem Sammeltrichter gesammelt wird, dann durch eine Massentransportvorrichtung zum oberen Ende der Getreidemasse hochbefördert wird und durch die Wirkung von Ladearmen (25), welche an dem oberen Ende der aufrechten angetriebenen Welle angeordnet sind, über die Getreidemasse verteilt wird, derart, dass die Gesamtwirkung derart ist, dass die Getreidemasse, die in das Gefäß eingeführt wird, auf eine Weise von unten nach oben umgewälzt wird, wobei das Umwälzen in einem kontinuierlichen Zyklus während eines Zeitraums, der für den Zweck eines Mälzprozesses geeignet ist, betrieben werden kann.

2. Verfahren zum Durchführen eines Mälzprozesses nach Anspruch 1, wobei der Prozess ein Trocknungsprozess ist und das Gefäß mit aufbereiteter Luft versorgt wird.

3. Verfahren zum Durchführen eines Mälzprozesses nach Anspruch 1, wobei der Prozess ein Einweichprozess ist und das Gefäß mit Mitteln für die Zufuhr und den Abzug von Wasser und aufbereiteter Luft versehen ist.

4. Verfahren zum Durchführen eines Mälzprozesses nach Anspruch 1. wobei der Prozess ein Keimprozess ist und das Gefäß mit aufbereiteter Luft und Wasser versorgt wird.

5. Verfahren zum Durchführen eines Mälzprozesses nach Anspruch 1. wobei der Prozess ein Darrprozess ist und das Gefäß mit aufbereiteter Luft versorgt wird.

6. Verfahren zum Durchführen eines Mälzprozesses nach Anspruch 1. wobei der Prozess ein Röstprozess ist und das Gefäß mit aufbereiteter Luft und Wasser versorgt wird.

7. Verfahren zum Durchführen eines Mälzprozesses nach Anspruch 1, wobei der Prozess aus einer beliebigen Kombination aus Trocknen, Einweichen, Keimen, Darren und Rösten besteht.

8. Vorrichtung zum Durchführen von Mälzprozessen, umfassend ein Gefäß, welches versehen ist mit einem Antriebsmittel, einer angetriebenen Welle (17), welche beim Gebrauch in Bezug auf die Getreidemasse aufrecht angeordnet ist, einer Mehrzahl von Dreharmen (12), die zur Drehung im Wesentlichen in der Ebene des Stücks um die Welle angebracht sind, wobei die Dreharme eine Mehrzahl von radial positionierten aufrechten Platten (18) umfassen, die in abnehmenden Höhenstufen angeordnet sind, derart, dass die Gesamtwirkung derart ist, dass eine Reihe von Abstreifplatten zum Transportieren von Getreide schrittweise von der Basis des Gefäßes vorgesehen wird, einem Sammeltrichter (9), der in der Mitte der Basis des Gefäßes angeordnet ist, und einer Massentransportvorrichtung zum Hochfördern der Getreidemasse aus dem Sammeltrichter zu einem erhöhten Austragsniveau, wobei sich eine Mehrzahl von Ladearmen (25) im Wesentlichen in der Ebene des Stücks, das an einer angetriebenen Welle angebracht ist, zum Umverteilen des hochbeförderten Getreides auf die Getreidemasse drehen.

9. Vorrichtung zum Durchführen eines Mälzprozesses nach Anspruch 8, wobei die Mehrzahl von radial positionierten aufrechten Platten jeweils radial um ein bestimmtes Winkelmaß versetzt sind, wobei sie einen Fegearm bilden, der sich von der Welle wegerstreckt und eine Krümmung aufweist, wodurch das distale Ende des Arms in Bezug auf das angebrachte Ende des Arms während jeder Rotation der Welle nacheilt.

10. Vorrichtung zum Durchführen eines Mälzprozesses nach Anspruch 8 oder 9. wobei die Massentransportvorrichtung innerhalb der angetriebenen Welle angeordnet ist, welche die Ladearme und die Abstreifplatten antreibt.

11. Vorrichtung zum Durchführen eines Mälzprozesses nach Anspruch 10, wobei die Massentransportvorrichtung ein Schneckenförderer ist, der in einer Büchse angeordnet ist.

12. Vorrichtung zum Durchführen eines Mälzprozesses nach einem beliebigen der Ansprüche 8 bis 11, wobei sich die Ladearme im Wesentlichen in einer Ebene parallel zu der Getreidemasse drehen.

13. Vorrichtung zum Durchführen eines Mälzprozesses nach einem beliebigen der Ansprüche 8 bis 11, wobei die Ladearme eine Krümmung aufweisen, wodurch das distale Ende des Arms in Bezug auf das angebrachte Ende des Arms während jeder Rotation der Welle nacheilt, wobei die Krümmung der Krümmung des vorhin genannten Fegearms entspricht.

14. Vorrichtung zum Durchführen eines Mälzprozesses nach einem beliebigen der Ansprüche 8 bis 14, wobei die Ladearme der Entfernung nach von dem Fegearm wegbewegt werden können.

15. Vorrichtung zum Durchführen eines Mälzprozesses nach einem beliebigen der vorangehenden Ansprüche 8 bis 14, wobei das Gefäß einen im Wesentlichen zylindrischen Querschnitt aufweist und ferner mit einem eine Öffnung aufweisenden Boden, einer Isolierung, Luft- und Wassereinlässen und -auslässen, Wärmetauschern und Mittel zum Befeuchten der Luft ausgestattet ist.

## Revendications

1. Procédé destiné à exécuter un processus de maltage dans lequel une masse de grains est introduite dans une cuve (1), la partie du grain qui est sensiblement adjacente à la base de la cuve est déplacée, de façon incrémentielle, jusqu'à une trémie de récupération (9) au centre de la base de la cuve par l'action de plaques à huit étages (18) d'une hauteur descendante radialement montées sur des bras tournants (12), lesdits bras tournants effectuant une rotation dans un plan sensiblement horizontal et étant situés au niveau de l'extrémité inférieure d'un arbre entraîné droit (17), le grain étant récupéré dans ladite trémie de récupération puis soulevé vers le haut de la masse de grains par un dispositif de transfert de masse et réparti sur ladite masse de grains par l'action de bras de chargement (25) situés au niveau de l'extrémité supérieure de l'arbre entraîné droit de telle sorte que l'effet global est le retournement de la masse de grains introduite dans le récipient du bas vers le haut, ledit retournement étant réalisable en un cycle continu pendant une période de temps adéquate pour un processus de maltage.

2. Procédé destiné à exécuter un processus de maltage selon la revendication 1 dans lequel le processus est un processus de séchage et la cuve est alimentée avec de l'air conditionné.

3. Procédé destiné à exécuter un processus de maltage selon la revendication 1, dans lequel le processus est un processus de trempage et la cuve est alimentée par un moyen pour l'alimentation et l'évacuation de l'eau et de l'air conditionné.

4. Procédé destiné à exécuter un processus de maltage selon la revendication 1, dans lequel le processus est un processus de germination et la cuve est alimentée en air conditionné et en eau.

5. Procédé destiné à exécuter un processus de maltage selon la revendication 1, dans lequel le processus est un processus de touraillage et la cuve est alimentée en air conditionné.

6. Procédé destiné à exécuter un processus de maltage selon la revendication 1, dans lequel le processus est un processus de torréfaction et la cuve est alimentée en air conditionné et en eau.

7. Procédé destiné à exécuter un processus de maltage selon la revendication 1, dans lequel le processus consiste en toute combinaison quelconque parmi un processus de séchage, de trempage, de germination, de touraillage et de torréfaction.

8. Appareil destiné à exécuter des processus de maltage comprenant une cuve prévue avec un moyen d'entraînement, un arbre entraîné (17) agencé pour être droit en utilisation par rapport à la masse de grains, une pluralité de bras tournants (12) montés pour effectuer une rotation sensiblement dans le plan de la pièce autour dudit arbre, lesdits bras tournants comprenant une pluralité de plaques droites (18) positionnées radialement agencées dans des étages à hauteur descendante, de telle sorte que l'effet global consiste à fournir une série de plaques d'enlèvement pour déplacer le grain de façon incrémentielle depuis la base de la cuve, une trémie de récupération (9) située au centre de la base de la cuve, et un dispositif de transfert de masse destiné à soulever la masse de grains de la trémie de récupération jusqu'à un niveau d'évacuation élevé, une pluralité de bras de chargement (25) effectuant une rotation sensiblement dans le plan de la pièce montée sur un arbre entraîné, afin de rerépartir le grain élevé sur la masse de grains.

9. Appareil destiné à exécuter un processus de maltage selon la revendication 8, dans lequel la pluralité de plaques droites positionnées radialement sont chacune décentrées radialement selon une certaine quantité angulaire, constituant un bras de balayage qui s'étend depuis l'arbre et ayant une courbure moyennant quoi l'extrémité distale du bras, par rapport à l'extrémité montée du bras, suit au cours de chaque rotation de l'arbre.

10. Appareil destiné à exécuter un processus de maltage selon la revendication 8 ou 9, dans lequel le dispositif de transfert de masse est situé à l'intérieur de l'arbre entraîné qui entraîne les bras de chargement et les plaques d'enlèvement.

11. Appareil destiné à exécuter un processus de maltage selon la revendication 10, dans lequel le dispositif de transfert de masse est un transporteur à vis situé dans un manchon.

12. Appareil destiné à exécuter un processus de maltage selon l'une quelconque des revendications 8 à 11, dans lequel lesdits bras de chargement effectuent une rotation sensiblement dans un plan parallèle à la masse de grains.

13. Appareil destiné à exécuter un processus de maltage selon l'une quelconque des revendications 8 à 11, dans lequel lesdits bras de chargement ont une courbure moyennant quoi l'extrémité distale du bras, par rapport à l'extrémité montée du bras, suit au cours de chaque rotation de l'arbre, ladite courbure correspondant à la courbure du bras de balayage susmentionné.

14. Appareil destiné à exécuter un processus de maltage selon l'une quelconque des revendications 8 à 14, dans lequel les bras de chargement sont mobiles à distance du bras de balayage.

15. Appareil destiné à exécuter un processus de maltage selon l'une quelconque des revendications 8 à 14 dans lequel la cuve est sensiblement cylindrique en coupe et est en outre équipée d'un fond foraminé, d'une isolation, d'entrées et de sorties d'air et d'eau, d'échangeurs thermiques et de moyens destinés à humidifier l'air.
